Europäisches Patentamt

European Patent Office

Office européen des brevets

(19)

(11) Veröffentlichungsnummer: **0 017 774**
**B1**

(12) **EUROPÄISCHE PATENTSCHRIFT**

(45) Veröffentlichungstag der Patentschrift: **29.06.83**

(51) Int. Cl.³: **B 01 D 3/42**

(21) Anmeldenummer: **80101401.0**

(22) Anmeldetag: **18.03.80**

(54) Verfahren zur Regelung der einer Extraktivdestillationskolonne am Sumpf zugeführten Wärmemenge.

(30) Priorität: **21.04.79 DE 2916175**

(43) Veröffentlichungstag der Anmeldung:
**29.10.80 Patentblatt 80/22**

(45) Bekanntmachung des Hinweises auf die Patenterteilung:
**29.06.83 Patentblatt 83/26**

(84) Benannte Vertragsstaaten:
**AT BE FR GB IT NL**

(56) Entgegenhaltungen:
**DE - A - 1 619 738**
**DE - A - 2 420 699**
**DE - A - 2 430 711**
**DE - A - 2 445 596**
**DE - A - 2 508 139**
**DE - A - 2 515 282**
**DE - A - 2 818 527**
**DE - C - 1 078 541**

**CHEMISCHE TECHNIK, Band 28, Nr. 12,**
**Dezember 1976 Berlin G. BRACK et al. "Zur**
**Wahl des Messbodens bei der Regelung von**
**Rektifikationskolonnen" Seiten 715 bis 718**

(73) Patentinhaber: **Krupp-Koppers GmbH**
**Moltkestrasse 29**
**D-4300 Essen 1 (DE)**

(72) Erfinder: **Preusser, Gerhard, Dr. Dipl.-Chem.**
**Lönsberg 24**
**D-4300 Essen 1 (DE)**
Erfinder: **Richter, Klaus**
**Kanarienberg 1**
**D-4300 Essen 1 (DE)**
Erfinder: **Schulze, Martin**
**Krüdenscheider Weg 83**
**D-5604 Neviges (DE)**

(56) Entgegenhaltungen:
**REGELUNGSTECHNISCHE PRAXIS UND**
**PROZESS-RECHENTECHNIK, Band 12, Nr. 4,**
**1970 W. SIELER "Zur Auswahl von**
**Regelsystemen bei Destillationskolonnen, Teil I"**
**Seiten 142 bis 148**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Regelung der einer Extraktivdestillations kolonne am Sumpf zugeführten Wärmemenge

Die Erfindung betrifft ein Verfahren zur Regelung der Wärmemenge, die einer der Trennung von Stoffgemischen dienenden Extraktivdestillationskolonne über einem einzigen Aufkocher am Sumpf zugeführt wird.

Die Extraktivdestillation ist heute ein in der Praxis verbreitetes und bewährtes Trennverfahren zur Trennung von Stoffgemischen, insbesondere von Kohlenwasserstoffgemischen, die sich aufgrund der Siedelage ihrer Komponenten rein destillativ nicht oder nur in unbefriedigendem Umfange trennen lassen. Gegenüber der für den genannten Zweck auch häufig angewandten Flüssig-Flüssig-Extraktion weist die Extraktivdestillation eine ganze Reihe von apparativen und verfahrenstechnischen Vorteilen auf. Als Beispiele hierfür seien genannt:

Für die Durchführung des Verfahrens werden nur zwei Destillationskolonnen benötigt. Das Lösungsmittel wird in der Regel wasserfrei verwendet. Es sind deshalb keine gesonderten Wasserkreisläufe erforderlich. Ferner wird bei der Extraktivdestillation infolge der angewandten höheren Temperaturen die Viskosität des Extraktionsmittels stark herabgesetzt, wodurch der Stoffaustausch zwischen dem Extraktionsmittel und dem zu extrahierenden Stoff wesentlich verbessert wird. Man erhält daher eine bessere Beladefähigkeit und kann bei gleicher Leistung mit kleineren Extraktionsmittelmengen auskommen. Ebenso können die Dimensionen des Extraktors meist verringert werden. Durch die erzielten apparativen Vorteile liegen die Investitionskosten einer Extraktivdestillation wesentlich unter denen einer enstprechenden Flüssig-Flüssig-Extraktion. Die Betriebskosten sind ebenfalls günstiger und betragen teilweise nur 50% einer entsprechenden Flüssig-Flüssig-Extraktion.

Bei der Flüssig-Flüssig-Extraktion ist die Ausbildung zweier flüssiger Phasen die Voraussetzung für eine erfolgreiche Trennung des eingesetzten Stoffgemisches. Im Idealfall soll dabei die eine Phase die Komponenten des Extraktes und das Extraktionsmittel enthalten, während die andere Phase nur aus den Komponenten des Raffinates bestehen soll. Häufig ist es jedoch bei der Flüssig-Flüssig-Extraktion notwendig, durch einen Wasserzusatz zum Extraktionsmittel dessen Selektivität zu verbessern, um damit die Ausbildung zweier flüssiger Phasen zu begünstigen. Bei Wasserzusatz zum Extraktionsmittel sind dann, wie bereits erwähnt wurde, gesonderte Wasserkreisläufe erforderlich, die zur Erhöhung der Anlagekosten der Flüssig-Flüssig-Extraktion beitragen.

Im Gegensatz dazu liegen die Verhältnisse bei der Extraktivdestillation ganz anders. Hier beruht die Trennwirkung darauf, dass durch die Gegenwart des Extraktionsmittels die Dampfdrücke der einzelnen Komponenten des zu trennenden Stoffgemisches verändert werden. Die Veränderung erfolgt dabei in der Weise, dass die Dampfdruckunterschiede zwischen den Komponenten, die sich im Extrakt anreichern sollen, und jenen Komponenten, die sich im Raffinat anreichern sollen, vergrössert werden. Dadurch können die letzteren als leichter siedende Fraktion über Kopf aus der Extraktivdestillationskolonne abdestilliert werden. Auf das das Raffinat darstellende Kopfprodukt wirken sich jedoch alle Regelabweichungen der der Extraktivdestillationskolonne zugeführten Wärmemengenströme mehr oder weniger stark aus, so dass dessen Zusammensetzung in Abhängigkeit von der der Extraktivdestillationskolonne zugeführten Wärmemenge und der Zusammensetzung des zu trennenden Stoffgemisches nicht unbedeutenden Schwankungen unterworfen sein kann. In der Regel erhöht sich dabei der Anteil von Komponenten des Extraktes im Raffinat.

Welchen Einfluss das in der Praxis haben kann, zeigt das nachfolgende Zahlenbeispiel, welches unterschiedliche Einsatzprodukte für die Gewinnung aromatischer Kohlenwasserstoffe durch Extraktivdestillation betrifft. Dabei werden bekanntlich die zu gewinnenden Aromaten zusammen mit dem Extraktionsmittel als Extrakt aus dem Sumpf und die Nichtaromaten als Raffinat über Kopf aus der Extraktivdestillationskolonne abgezogen. Geht man davon aus, dass dieses Raffinat noch jeweils 20 Gew.-% Aromaten enthält, was bei üblicher, dem Stand der Technik entsprechender Regelung der Wärmemengenzufuhr zur Extraktivdestillationskolonne der Fall ist, so ergeben sich in Abhängigkeit vom Nichtaromatengehalt des Einsatzproduktes folgende Aromatenverluste:

| Einsatzprodukt: | Nichtaromaten im Einsatzprodukt: | Aromatenverluste: |
|---|---|---|
| Kokereibenzol | 4 Gew.-% | 1,04 Gew.-% |
| Pyrolysebenzin | 20 Gew.-% | 6,25 Gew.-% |
| Pyrolysebenzin | 30 Gew.-% | 10,71 Gew.-% |

Die vorstehenden Zahlen lassen klar erkennen, dass sich der Aromatenverlust umso schwerwiegender bemerkbar macht, je höher der Nichtaromatengehalt des Einsatzproduktes ist. Die Anwendung der Extraktivdestillation zur Aufarbeitung von Einsatzprodukten mit hohem Nichtaromatengehalt ist deshalb nur dann technisch interessant, wenn es gelingt, den Aromatengehalt im Raffinat und damit die Aromatenverluste niedrig zu halten. Angestrebt wird dabei ein Aromatengehalt im Raffinat in der Grössenordnung von 1—3 Gew.-%. Berechnungen haben jedoch ergeben, dass Schwankungen der der Extraktivdestillationskolonne zugeführten Wärmemenge in der Grössenordnung von 0,009% der Gesamtwärmemenge bereits zu einer Veränderung des Aromatengehaltes des Raffinates von etwa 1 Gew.-% führten. Diese Zahlenrelation unterstreicht eindeutig die Notwendigkeit einer äußerst exakten und speziellen Regelung der der Extraktivdestillationskolonne zugeführten Wärmemenge.

Es ist zwar bei destillativen Trennprozessen allgemein bekannt und üblich, die Wärmezufuhr zu den Aufkochern am Sumpf der Kolonnen in Abhängigkeit von der Kopf- und/oder Sumpftemperatur zu steuern. Auch ist es üblich, über Änderungen der Rückflussmenge und/oder temperatur den Wärmehaushalt der Kolonne aufrechtzuerhalten. Des weiteren hat man bereits die Wärmezufuhr zu den Aufkochern der Destillationskolonne in Abhängigkeit von der Kopfproduktmenge gesteuert.

Speziell im Hinblick auf die Extraktivdestillation ist schon vorgeschlagen worden, die Wärmezufuhr zur Extraktivdestillationskolonne durch Änderung der Menge des am Kopf der Kolonne aufgegebenen Extraktionsmittels zu steuern. Das hat aber den Nachteil, daß dann das für eine optimale Trennung erforderliche Mengenverhältnis von Extraktionsmittel zu Einsatzprodukt, welches für eine wirtschaftliche Betriebsweise möglichst konstant gehalten werden sollte, ständigen Änderungen unterliegt. Daraus resultieren dann verminderte Ausbeuten und geringere Produktreinheiten. Aus der DE—A—2515 282 ist ferner ein Verfahren zum Regeln und Steuern der Wärmemenge bekannt, die der Extraktionsdestillationskolonne am Sumpf zugeführt wird, bei dem die im Unterteil der Kolonne aufsteigende Dampfmenge über eine Regel- bzw. Steuereinrichtung erfaßt und als Regelgröße für die Brennstoffzufuhr zum Sumpfumlaufkocher der Kolonne benutzt wird. Weiterhin ist es aus der DE—A—2818 527 bekannt, die Wärmezufuhr zur Extraktivdestillationskolonne in Abhängigkeit von der auf einem der oberen Kolonnenböden gemessenen Temperatur zu steuern. In den beiden zuletzt genannten Fällen können dabei gegebenenfalls auch mehrere Aufkocher für die Kolonnenbeheizung verwendet werden.

Tatsächlich reichen aber alle vorstehend beschriebenen Methoden nicht aus, um insbesondere bei Verwendung eines einzigen Aufkochers die im Interesse einer Ausbeute-Maximierung in der Praxis erforderliche Genauigkeit bei der Wärmemengenzufuhr zur Extraktivdestillationskolonne sicherzustellen.

Der Erfindung lag deshalb die Aufgabe zugrunde, ein Verfahren zur Regelung der einer Extraktivdestillationskolonne am Sumpf zuzuführenden Wärmemenge zu schaffen, das im Hinblick auf seine Genauigkeit und Betriebssicherheit den gestellten Anforderungen vollauf genügt.

Dies wird beim Verfahren der eingangs genannten Art erfindungsgemäß dadurch erreicht, daß 80—90% der insgesamt dem Aufkocher zuzuführenden Wärmemenge einer Grobregelung unterworfen werden, wobei die Zufuhr dieser Wärmemenge entweder in Abhängigkeit von der Menge des der Extraktivdestillationskolonne zugeführten Einsatzproduktes geregelt oder von vornherein als fester Wert eingestellt wird, während für die restlichen 10—20% der insgesamt dem Aufkocher zuzuführenden Wärmemenge eine Feinregelung in der Weise erfolgt, daß als Regelgröße eine interne Größe der Extraktivdestillationskolonne dient, deren Meßstellen auf Böden im Oberteil der Extraktivdestillationskolonne angeordnet sind.

Dabei soll die für die Grobregelung vorgesehene größere Teilmenge vorzugsweise 90% und die für die Feinregelung vorgesehene kleinere Teilmenge vorzugsweise 10% der insgesamt der Extraktivdestillationskolonne zuzuführenden Wärmemenge betragen.

Hinsichtlich der Regelgröße für die kleinere Teilmenge (Feinregelung) bestehen verschiedene Möglichkeiten. Diese kleinere Teilmenge kann entweder in Abhängigkeit von der Flüssigkeitstemperatur auf einem der Böden im Oberteil der Extraktivdestillationskolonne oder in Abhängigkeit von der Differenz der Flüssigkeitstemperatur auf zwei verschiedenen Böden im Oberteil der Extraktivdestillationskolonne gesteuert werden.

Ferner ist es möglich, daß die der Feinregelung dienende kleinere Teilmenge durch die mit Hilfe eines Gaschromatographen auf einem der Böden im Oberteil der Extraktivdestillationskolonne ermittelte Konzentration an dem zu extrahierenden Stoff gesteuert wird.

Es kann schließlich ausserdem eine Schaltung vorgesehen werden, bei der Stellwert der Feinregelung proportional in stark abgeschwächter Form den Sollwert der Grobregelung verstellt und damit die Feinregelung im optimalen Arbeitsbereich hält.

Die vorstehenden Ausführungen zeigen, daß die Meßstellen für die Regelgrößen der kleineren Teilmenge auf Böden im Oberteil der Extraktivdestillationskolonne angeordent sein sollen. Es hat sich dabei als vorteilhaft erwiesen, wenn die Meßstellen auf Böden angeordnet sind, deren von oben gerechnete Bodenzahl im Bereich zwischen 5 und 20%, vorzugsweise 15%, der Gesamtbodenzahl liegt, beispielsweise im Falle einer mit 60 Böden versehenen Extraktivdestillationskolonne auf dem 9. Boden von oben.

Nachfolgend sollen das erfindungsgemäße Verfahren und dessen Bedeutung an Hand der Abbildungen noch weiter erläutert werden.

Es zeigen dabei:

Fig. 1 die schematische Darstellung einer Extraktivdestillationskolonne mit den erforderlichen Nebeneinrichtungen, bei der das erfindungsgemässe Verfahren zur Anwendung gelangt und

Fig. 2 eine graphische Darstellung für ein Anwendungsbeispiel, welche den Gehalt an Kohlenwasserstoffen des Extraktes (Toluol) im Raffinat in Abhängigkeit von der jeweiligen Flüssigkeitstemperatur auf dem Messboden wiedergibt.

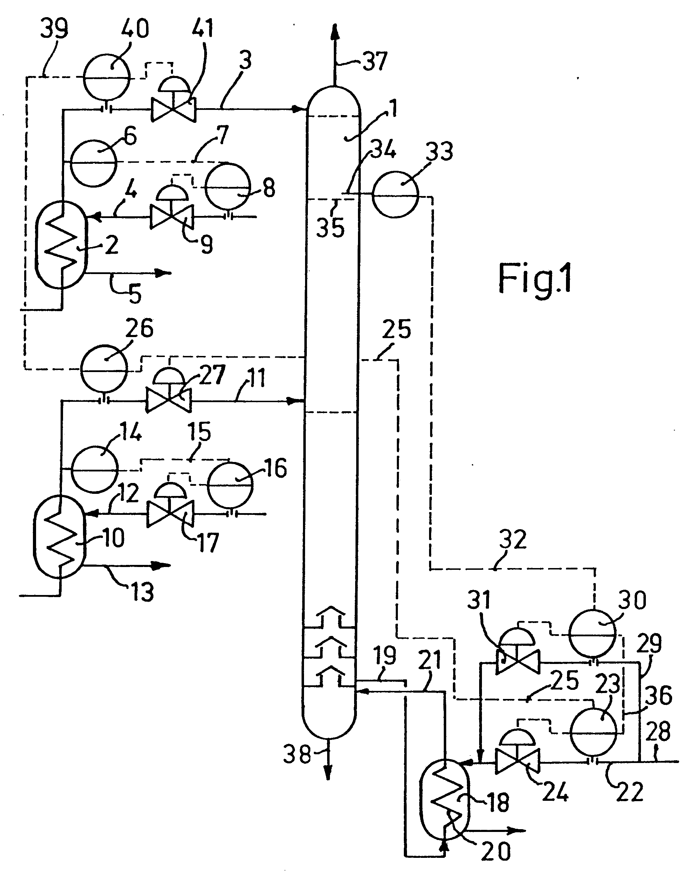

In der schematischen Darstellung in Fig. 1 ist die Extraktivdestillationskolonne mit 1 bezeichnet. Das Extraktionsmittel wird über den Kühler 2 und die Leitung 3 auf den Kopf der Extraktivdestillationskolonne 1 aufgegeben. Das zur Kühlung des Extraktionsmittels erforderliche Kühlmittel, wie z.B. Wasser, wird dem Kühler 2 über die Leitung 4 zugeführt und über die Leitung 5 wieder abgezogen. In der Leitung 3 kann dabei der Temperaturemesser 6 installiert sein, durch den die Temperatur des zur Extraktivdestillationskolonne 1 fliessenden Extraktionsmittels erfasst wird, wobei der erhaltene Messwert über die Impulsleitung 7 auf den Durchflussregler 8 übertragen werden kann, der über das Ventil 9 die Menge des durch die Leitung 4 fliessenden Kühlmittels regelt. Gegebenenfalls kann die Kühlung des Extraktionsmittels auch durch einen Luftkühler erfolgen. Dann regelt der Temperaturmesser 6 die Kühlleistung des dazugehörigen Ventilators, so dass das Extraktionsmittel ebenfalls mit der gewünschten Temperatur auf die Extraktivdestillationskolonne 1 aufgegeben wird.

Das aufzutrennende Stoffgemisch (Einsatzprodukt) wird über den Erhitzer 10 und die Leitung 11 in den mittleren Teil der Extraktivdestillationskolonne 1 eingeleitet. Der zur Aufheizung des Stoffgemisches erforderliche Wärmeträger wir dem Erhitzer 10 über die Leitung 12 zugeführt und über die Leitung 13 wieder abgezogen. Entsprechend der Regelung beim Extraktionsmittel ist auch hier in der Leitung 11 ein Temperaturmesser 14 installiert, dessen Messwert über die Impulsleitung 15 auf den Durchflussregler 16 übertragen wird. Dieser steuert über das Ventile 17 die Wärmeträgerzufuhr in der Leitung 12.

Für die Beheizung der Extraktivdestillationskolonne 1 ist am Unterteil derselben der Aufkocher 18 vorgesehen, der als Durchlaufkocher und/oder als Sumpfumlaufkocher geschaltet werden kann. Das mit dem zu extrahierenden Stoff beladene Extraktionsmittel wird dabei beispielsweise vom untersten Boden oder einem der unteren Böden der Extraktivdestillationskolonne 1 über die Leitung 19 abgezogen und gelangt in die Rohrschlange 20 des Aufkochers 18, in dem es die erforderliche Aufheizung erführt. Das aufgeheizte Produkt fliesst sodann über die Leitung 21 in die Extraktivdestillationskolonne 1 zurück, wobei es unterhalb des Abzugsbodens wieder eingeleitet wird.

Erfindungsgemäss wird die Wärmemengenzufuhr zum Aufkocher 18 der Extraktivdestillationskolonne 1 wie folgt geregelt.

In der Leitung 22, durch welche der erforderliche Wärmeträger dem Aufkocher 18 zugeführt wird, ist der Durchflussregeler 23 mit dem Ventil 24 installiert. Über die Impulsleitung 25 steht der Durchflussregler 23 mit dem Durchflussmesser 26 in Verbindung, der in der Leitung 11 installiert ist. Die Menge des durch diese Leitung zur Extraktivdestillationskolonne 1 fliessenden Stoffgemisches (Einsatzprodukt), die durch das Ventil 27 beeinflusst werden kann, wird in diesem Falle vom Durchflussmesser 26 erfasst und dient als Regelgrösse für den Durchflussregler 23, der das Ventil 24 betätigt. Der Regelbereich des Durchflussreglers 23 ist dabei erfindungsgemäss so eingestellt, dass etwa 80—90% der ingesamt über die Leitung 28 in Form eines geeigneten Wärmeüberträgers zugeführten Wärmemenge über die Leitung 22 und das Ventil 24 in den Aufkocher 18 eingeleitet wird. Die restliche Wärmemenge gelangt in Form des verwendeten Wärmeträgers in die Bypassleitung 29. In dieser ist der Durchflussregler 30 mit dem Ventil 31 angeordnet. Über die Impulsleitung 32 steht der Durchflussregler 30 mit dem Messgerät 33 in Verbindung. Der Messpunkt 34 liegt dabei auf einem der oberen Böden der Extraktivdestillationskolonne 1. Wie aus den Ausführungen weiter oben zu entnehmen ist, kann es sich bei dem Messgerät 33 entweder um ein Temperaturmessgerät oder einen Gaschromatographen handeln. Die auf dem Messboden 35 erfasste Flüssigkeitstemperatur, bzw. bei Anwendung eines Gaschromatographen die Konzentration des zu extrahierenden Stoffes, wird als Regelgrösse über die Impulsleitung 32 auf den Durchflussregler 30 übertragen. Dieser regelt über das Ventil 31 den Fluss des Wärmeträgers durch die Bypassleitung 29 zum Aufkocher 18, so dass damit die kleinere Teilmenge der ingesamt der Extraktivdestillationskolonne 1 zuzuführenden Wärmemenge gesteuert wird.

Zusätzlich können der Durchflussregeler 30 und der Durchflussregler 23 durch eine Impulsleitung 36 miteinander verbunden sein. Dadurch wird eine zusätzliche Regelungsmöglichkeit geschaffen, bei der der Stellwert des Durchflussreglers 30 über die Impulsleitung 36 proportional in stark abgeschwächter Form den Sollwert des Durchflussreglers 23 verstellt. Dadurch wird die Feinregelung in einem optimalen Regelbereich gehalten. So kann beispielsweise der Durchflussregler 30 so eingestellt werden, dass ein Regelimpuls ausgelöst wird, wenn die vom Durchflussregler 30 erfasste Wärmemenge einem bestimmten Grenzwert, z.B. 20% der Gesamtwärmemenge, überschreitet. Dieser Regelimpuls wird dann über die Impulsleitung 36 auf den Durchflussregler 23 übertragen und bewirkt dort eine entsprechende Erhöhung der Wärmezufuhr zum Aufkocher 18 über die Leitung 22. Natürlich ist eine derartige Regelung gegebenenfalls auch in umgekehrter Richtung möglich, bei der beim Überschreiten eines bestimmten Grenzwertes im Durchflussregler 23 ein entsprechender Regelimpuls auf den Durchflussregler 30 übertragen wird.

Über den Durchflussmesser 26 kann ferner, um ein konstantes Verhältnis von Einsatzprodukt- und Extraktionsmittelmenge zu gewährleisten, die Zufuhr des Extraktionsmittels über die Leitung 3 zur Extraktivdestillationskolonne 1 gesteuert werden. Dabei wird der im Durchflussmesser 26 ermittelte Wert zusätzlich über die Impulsleitung 39 auf den Durchflussregler 40 übertragen, der auf das Ventil 41 einwirkt.

Im vorliegenden Falle wird das Raffinat über die Leitung 37 und der Extrakt über die Leitung 38 aus der Extraktivdestillationskolonne 1 abgezogen. Deren Aufarbeitung bzw. Weiterverarbeitung erfolgt nach bekannten Methoden. Da dies jedoch nicht mehr unmittelbar zur vorliegenden Erfindung gehört, braucht hierauf nicht näher eingegangen werden.

Die schematische Darstellung in Fig. 1 ziegt die der Durchführung der Erfindung dienende Vorrichtung selbstverständlich in stark vereinfachter Darstellung. So sind z.B. konstruktive Einzelheiten der verwendeten Extraktivdestillationskolonne dieser Darstellung nicht zu entnehmen. Es kann sich hierbei jedoch um eine Kolonne bekannter Bauart, wie z.B. Ventil- oder Glockenbodenkolonne, handeln. Ebenso sind die verwendeten Mess- und Regeleinrichtung von bekannter Bauart.

Die Ausführungen weiter oben lassen ferner erkennen, dass gegenüber der in Fig. 1 dargestellten Ausführungsform verschiedene Abweichungen möglich sind. So kann beispielsweise die über die Leitung 22 zugeführt Wärmemenge innerhalb der erfindungsgemäßen Grenzen auf einen festen Wert eingestellt werden, so daß in diesem Fall die Regelung in Abhängigkeit von dem Durchflußmesser 26 ermittelten Wert entfallen kann. Dies ist insbesondere beim Anfahren der Anlage möglich, oder wenn das zu trennende Stoffgemisch hinsichtlich der zugeführten Menge, Temperatur und der Zusammensetzung keinen wesentlichen Schwankungen unterworfen ist. Schließlich kann die Temperaturmessung statt auf einem einzigen Meßboden 35 auch auf zwei verschiedenen Meßböden erfolgen, wobei die ermittelte Temperaturdifferenz als Regelgröße dient, welche auf den Durchflußregler 30 übertragen wird.

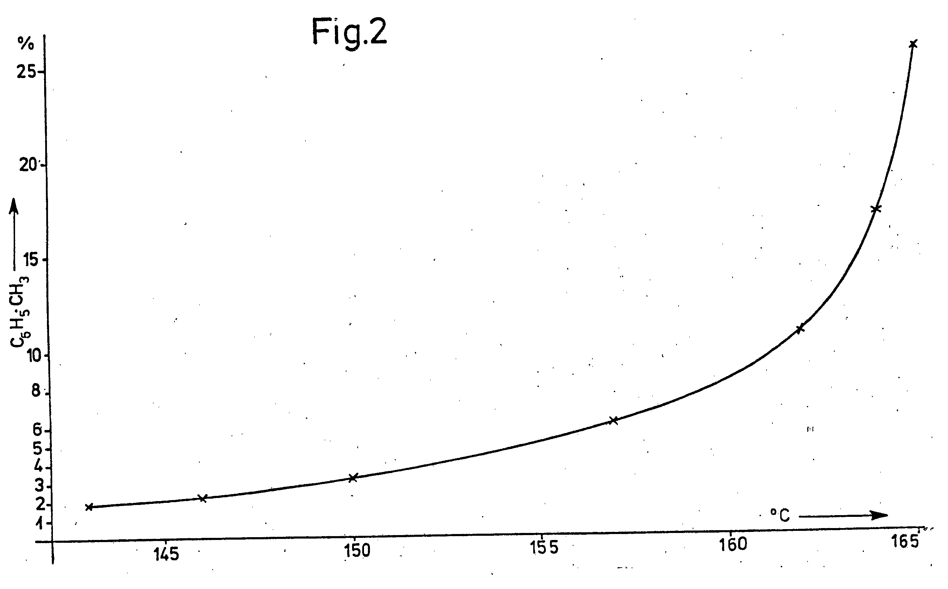

Die graphische Darstellung in Fig. 2 unterstreicht, welche Bedeutung der erfindungsgemässen Arbeitsweise zukommt. Am Beispiel der Extraktivdestillation einer Toluolfraktion soll gezeigt werden, welchen Einfluss die Temperatur in der Extraktivdestillationskolonne auf die Zusammensetzung des Raffinates ausübt. Dabei soll das Toluol von den nichtaromatischen Bestandteilen als Extrakt abgetrennt werden, während sich letztere im Raffinat anreichern. Die Wirksamkeit der Extraktivdestillation ist umso grösser, je geringer der Gehalt des Toluols im Raffinat ist. Die Extraktivdestillation wurde in diesem Falle in einer mit 60 Böden versehenen Kolonne durchgeführt, wobei das Extraktionsmittel (N-Formylmorpholin) am Kopf und das Einsatzprodukt auf den 33. Boden von oben in die Kolonne eingeleitet wurde. Um die Beziehung zwischen der Flüssigkeitstemperatur auf den oberen Böden der Kolonne und dem entsprechenden Toluolgehalt der Raffinatphase zu untersuchen, wurde die der Extraktivdestillationskolonne am Sumpf zugeführt Wärmemenge allmählich gesteigert. Gleichzeitig wurde jeweils auf dem 8. Boden von oben die Flüssigkeitstemperatur gemessen und der entsprechende Toluolgehalt in der Flüssigkeit (Raffinatphase) ermittelt. Die ermittelten Werte wurden in einem Koordinatensystem graphisch aufgetragen, wobei der erhaltene und in Fig. 2 dargestellt Kurvenweg ganz klar erkennen lässt, dass mit steigender Flüssigkeitstemperatur der Toluolgehalt in der Flüssigkeit (Raffinatphase) in überraschender Weise ausserordentlich steil ansteigt. Im Bereich zwischen 145°C und 152,5°C steigt der Toluolgehalt in der Raffinatphase nur von ca. 2 Gew.-% auf etwa 4 Gew.-%. Im Bereich zwischen 164°C und 165°C steigt der Toluolgehalt dagegen von circa 17 Gew.-% auf circa 26 Gew.-%. Hieraus kann nur die Schlussfolgerung gezogen werden, dass es für den Erfolg der Extraktivdestillation von entscheidender Bedeutung ist, durch genaue Regelung der zugeführten Wärmemenge die Temperaturen im Oberteil der Extraktivdestillationskolonne in einem Bereich zu halten, in dem der Temperaturgradient, das heisst die für die Veränderung des Toluolgehaltes im Raffinat um ein Prozent erforderliche Temperaturänderung, hoch ist. Wird dagegen ein bestimmter Temperaturwert überschritten, so fällt der Temperaturgradient so stark ab, dass sich der Toluolgehalt im Raffinat durch eine Temperaturänderung auf dem Messboden kaum noch beeinflussen lässt.

Bezogen auf das vorliegende Anwendungsbeispiel bedeutet dies, dass man im Interesse einer Ausbeute-Maximierung den Toluolgehalt im Raffinat zwischen 2 und 4 Gew.-% halten sollte und deshalb die am Sumpf der Extraktivdestillationskolonne zugeführte Wärmemenge so geregelt werden muss, dass sich die Flüssigkeitstemperatur auf dem Messboden im Bereich zwischen etwa 145°C und 152,5°C hält.

Es wurde deshalb ein Vergleichsversuch durchgeführt, bei dem zunächst die auf dem Messboden (8. Boden von oben) ermittelte Flüssigkeitstemperatur als Regelgrösse für die gesamte am Sumpf der Extraktivdestillationskolonne zugeführte Wärmemenge benutzt wurde. Trotz Anwendung üblicher Regler und optimaler Regeleinstellung gelang es jedoch nicht, die Flüssigkeitstemperatur auf dem Messboden innerhalb der oben angegebenen Grenzen zu halten. Es traten vielmehr sinusförmige Temperaturschwankungen auf, in deren Auswirkung der Toluolgehalt im Raffinat zwischen 2 und 9 Gew.-% schwankte. Danach wurden entsprechend der erfindungs gemässen Arbeitsweise nur ca. 10 bis 11% der der Extraktivdestillationskolonne zugeführten Wärmemenge über die auf dem Messboden ermittelte Flüssigkeitstemperatur geregelt, während der verbleibende Hauptteil der zugeführten Wärmemenge als fester Wert eingestellt wurde. Mit dieser Einstellung konnte der Toluolgehalt im Raffinat über längere Zeiträume im Bereich zwischen 2,4 und 3,6 Gew.-% gehalten werden.

Die vorstehenden Ausführungen haben sich im wesentlichen mit Anwendung des erfindungsgemässen Verfahrens für die Abtrennung von aromatischen Kohlenwasserstoffen aus solche enthaltenden Stoffgemischen auseinandergesetzt. Tatsächlich stellt die Aromatenabtrennung auch ein bevorzugtes Arbeitsgebiet der Extraktivdestillation dar. Trotzdem ist die Anwendbarkeit der Extraktivdestillation und damit des erfindungsgemässen Verfahrens keineswegs auf diesen Anwendungsfall beschränkt, sondern man kann ganz allgemein Stoffe unterschiedlicher Polarität oder Polarisierbarkeit durch Extraktivdestillation von einander trennen.

Weitere wichtige Anwendungsbeispiele sind die Trennung von Mono- und Diolefinen sowie die Abtrennung dieser Verbindungen von nichtaromatischen Kohlenwasserstoffen. Das erfindungsgemässe Verfahren ist dabei auch nicht an die Anwendung eines bestimmten Extraktionsmittels gebunden.

## Patentansprüche

1. Verfahren zur Regelung der Wärmemenge, die einer der Trennung von Stoffgemischen dienenden Extraktivdestillationskolonne über einen einzigen Aufkocher am Sumpf zugeführt wird, dadurch gekennzeichnet, daß 80—90% der insgesamt dem Aufkocher zuzuführenden Wärmemenge einer Grobregelung unterworfen werden, wobei die Zufuhr dieser Wärmemenge entweder in Abhängigkeit von der Menge des der Extraktivdestillationskolonne zugeführten Einsatzproduktes geregelt oder von vornherein als fester Wert eingestellt wird, während für die restlichen 10—20% der insgesamt dem Aufkocher zuzuführenden Wärmemenge eine Feinregelung in der Weise erfolgt, daß als Regelgröße eine interne Größe der Extraktivdestillationskolonne dient, deren Meßstellen auf Böden im Oberteil der Extraktivdestillationskolonne angeordnet sind.

2. Verfahren nach Anspruch 1 dadurch gekennzeichnet, daß als Regelgröße für die Feinregelung die Flüssigkeitstemperatur auf einem der Böden im Oberteil der Extraktivdestillationskolonne benutzt wird.

3. Verfahren nach Anspruch 1, dadurch gekennzeichnet, daß als Regelgröße für die Feinregelung die Differenz der Flüssigkeitstemperatur auf zwei verschiedenen Böden im Oberteil der Extraktivdestillationskolonne benutzt wird.

4. Verfahren nach Anspruch 1, dadurch gekennzeichnet, daß als Regelgröße für die Feinregelung die durch einen Gaschromatographen auf einem der Böden im Oberteil der Extraktivdestillationskolonne ermittelte Konzentration an dem zu extrahierenden Stoff benutzt wird.

5. Verfahren nach den Ansprüchen 1 bis 4, dadurch gekennzeichnet, daß der Stellwert der Feinregelung proportional in stark abgeschwächter Form den Sollwert der Grobregelung verstellt.

6. Verfahren nach den Ansprüchen 1 bis 5, dadurch gekennzeichnet, daß die Meßstellen für die Regelgröße der Feinregelung auf Böden angeordnet sind, deren von oben gerechnete Bodenzahl im Bereich zwischen 5 und 20%, vorzugsweise 15%, der Gesamtbodenzahl liegt.

## Revendications

1. Procédé de régulation de la quantité de chaleur qui est amenée, en passant par un seul bouilleur, au bas d'une colonne de distillation extractive servant à la séparation de mélanges de corps, caractérisé par le fait que l'on soumet à une régulation grossière 80 à 90% de la quantité de chaleur à amener en tout au bouilleur, l'amenée de cette quantité de chaleur étant ou bien réglée sous la dépendance de la quantité de produit de départ amenée à la colonne de distillation extractive ou bien établie à l'avance comme valeur fixe, tandis que pour les 10 à 20% restants de la quantité de chaleur à amener en tout au bouilleur, on effectue une régulation précise en utilisant comme grandeur réglée une grandeur interne de la colonne de distillation extractive, dont les points de mesure sont disposés sur des plateaux de la partie supérieure de la colonne de distillation extractive.

2. Procédé selon la revendication 1, caractérisé par le fait que l'on utilise, comme grandeur réglée pour la régulation précise, la température du liquide sur l'un des plateaux de la partie supérieure de la colonne de distillation extractive.

3. Procédé selon la revendication 1, caractérisé par le fait que l'on utilise, comme grandeur réglée pour la régulation précise, la différence de température du liquide sur deux plateaux différents de la partie supérieure de la colonne de distillation extractive.

4. Procédé selon la revendication 1, caractérisé par le fait que l'on utilise, comme grandeur réglée pour la régulation précise, la concentration du corps à extraire, déterminée par un chromatographe à phase gazeuse sur l'un des plateaux de la partie supérieure de la colonne de distillation extractive.

5. Procédé selon les revendications 1 à 4, caractérisé par le fait que l'on modifie la grandeur réglante de la régulation précise proportionellement à la valeur de consigne de la régulation grossière, sous forme fortement atténuée.

6. Procédé selon les revendications 1 à 5, caractérisé par le fait que les points de mesure de la grandeur réglée de la régulation précise sont disposés sur des plateaux dont le nombre, calculé depuis le haut, se situe entre 5 et 20% et, de préférence, à 15% du nombre total de plateaux.

**Claims**

1. A process for controlling the quantity of heat supplied by a single reboiler to the sump of an extractive distilling column for separating material mixtures, characterized in that 80—90% of the quantity of heat supplied to the reboiler are subjected to a coarse adjustment, whereby the supply of this quantity of heat is controlled either by the amount of the raw material fed into the extractive distillation column, or by an initially set fixed value, whereas the remaining 10—20% of the quantity of heat supplied to the reboiler are subjected to a fine adjustment, whereby the controlling factor is an internal size of the extractive distillation column with measuring points situated on the plates in the upper part of the extractive distillation column.

2. A process in accordance with Claim 1 characterized in that the controlling factor for the fine adjustment is the liquid temperature on one of the plates in the upper part of the extractive distilling column.

3. A process in accordance with Claim 1 characterized in that the controlling factor for the fine adjustment is the difference between the liquid temperatures on two different plates of the upper part of the extractive distilling column.

4. A process in accordance with Claim 1 characterized in that the controlling factor for the fine adjustment is the concentration of the material to be extracted as measured by a gas-chromatograph on a sample taken from one plate in the upper part of the extractive distilling column.

5. A process in accordance with any one of Claims 1 to 4 characterized in that the regulating value of the fine adjustment is proportional in substantially weakened form to the regulating value of the coarse adjustment.

6. A process in accordance with any one of the Claims 1 to 5 characterized in that the measuring points for the controlling factors of the fine adjustment are on plates which are between 5 and 20%, preferably 15%, of the total number of plates and counted from the top.

Fig.1

Fig.2